# EUROPÄISCHE PATENTSCHRIFT

(11) **EP 1 084 783 B1**
(45) Veröffentlichungstag und Bekanntmachung des Hinweises auf die Patenterteilung: **08.06.2005**
(21) Anmeldenummer: 00118707.9
(22) Anmeldetag: 30.08.2000
(51) Int. Cl.: B23B 41/12, B23B 29/02

(54) **Verfahren zum spanenden Bearbeiten von Bohrungsoberflächen**
Method for machining boring surfaces
Procédé d'usinage de surfaces d'alésages

(30) Priorität: 14.09.1999 DE 19943990
(43) Veröffentlichungstag der Anmeldung: 21.03.2001
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav, Dr.jur. Dipl.-Ing.

(56) Entgegenhaltungen:
- EP-A- 0 552 425
- EP-A- 0 970 770
- DE-C- 623 253
- US-A- 5 788 434

## Beschreibung

Die Erfindung betrifft ein Verfahren zum spanenden Bearbeiten von in axialer Richtung in einem Abstand zueinander angeordneten Bohrungsoberflächen, insbesondere von Kurbelwellen- und/oder Nockenwellen-Lagerbohrungen, gemäß Oberbegriff des Anspruchs 1.

Bei der Bearbeitung der Oberfläche von Bohrungen der hier angesprochenen Art, insbesondere von Kurbelwellen- und/oder Nockenwellen-Lagerbohrungen, wird eine lange Bohrstange eingesetzt, die in die zu bearbeitenden Bohrungen eingefahren wird. Die Bohrstange ist mit Hilfe von sehr exakt zueinander positionierten Führungsbuchsen geführt, die -in Vorschubrichtung der Bohrstange gesehen- vor der ersten Bohrungsoberfläche beziehungsweise nach der letzten Bohrungsoberfläche angeordnet sind. Häufig wird noch eine weitere, in dem Bereich zwischen den beiden äußersten Bohrungsoberflächen angeordnete Führungsbuchse eingesetzt. Durch diese Führung der Bohrstange soll sichergestellt werden, daß die Bohrungen miteinander fluchten, also zueinander exakt radial ausgerichtet sind, was insbesondere bei Kurbelwelllen-/Nockenwellen-Lagerbohrungen maßgeblich für die Leistungsfähigkeit des Motors entscheidend ist. Es hat sich jedoch gezeigt, daß bei dem bekannten Verfahren zur Bearbeitung der Bohrungsoberflächen die Mittellage der Bohrungsmitte nicht in allen Fällen den Anforderungen entspricht.

Aus der EP-A-0 552 425 ist ein Verfahren zum Bohren einer Reihe von konzentrischen Nockenwellenlagern in einem Zylinderkopf oder -block durch Verwendung einer oder mehrerer vorher gebohrter Lagerungen zur Stützung und Führung des Bohrwerkzeugs bei der Bearbeitung der nächstfolgenden Lagerung bekannt. Hierbei wird ein Werkstück einmal positioniert und in eine Arbeitsstation festgespannt, um danach mit der rotierenden Bohrstange, die Schneidwerkzeuge aufweist, aufeinander folgende Lagerungen zu bearbeiten.

Es ist daher Aufgabe der Erfindung ein Verfahren zum Bearbeiten von in axialer Richtung in einem Abstand zueinander angeordneter Bohrungsoberflächen anzugeben, mit dessen Hilfe eine hohe Fluchtgenauigkeit der Bohrungen gewährleistet werden kann.

Zur Lösung dieser Aufgabe wird ein Verfahren mit den Merkmalen des Anspruchs 1 vorgeschlagen. Dieses zeichnet sich dadurch aus, dass zunächst die Oberfläche mindestens einer der beiden äußersten Bohrungen bearbeitet wird, um eine Lagerfläche für die Bearbeitung weiterer Bohrungsoberflächen zu erzeugen. Danach wird das die Bohrungsoberflächen aufweisende Werkstück, beispielsweise ein Kurbelwellengehäuse, um 180° um eine Achse in eine zweite Bearbeitungsposition verschwenkt und die andere äußerste Bohrungsoberfläche bearbeitet.

Schließlich wird eine Bohrstange durch eine der bearbeiteten äußersten Bohrungen in mindestens eine der zwischen den äußersten Bohrungsoberflächen liegenden Bohrungen eingefahren. Zur Bearbeitung der Bohrungsoberflächen wird die mindestens eine Schneideinrichtung umfassende Bohrstange in Rotation versetzt und in axialer Richtung verlagert. Dadurch, dass die Bohrstange in mindestens einer der beiden äußersten Bohrungsoberflächen, die bereits fertig bearbeitet sein kann, geführt ist, und dass die Bohrungsoberfläche aufweisende Werkstück in der einmal eingespannten Position um 180° gedreht wird, um die zweite äußerste Bohrung vorzunehmen, kann eine hohe Fluchtgenauigkeit der Bohrungen gewährleistet werden.

Aufgrund dieser Vorgehensweise können mit demselben Werkzeug die beiden äußersten Bohrungsoberflächen bearbeitet werden, ohne dass das Werkzeug hierzu in eine andere Arbeitsposition verlagert werden muss. Die Schwenkachse verläuft vorzugsweise in vertikaler Richtung, also radial zur Längsmittelachse der Bohrungen.

Somit sind die beiden äußersten Bohrungsoberflächen bearbeitet worden.

Die Bohrstange wird vorzugsweise in alle Bohrungen, also sowohl in die beiden äußersten, bereits zum Zwecke der Lagerung der Bohrstange bearbeiteten Bohrungen, als auch in die zwischen den beiden äußersten Bohrungsoberflächen angeordneten Bohrungen eingefahren, wobei durch die beiden äußersten, als Lagerflächen beziehungsweise Lagerstellen dienenden Bohrungsoberflächen die Bohrstange zentriert wird. Anschließend werden die übrigen Bohrungen durch eine Rotations- und Translationsbewegung der Bohrstange mit Hilfe mindestens einer Schneideinrichtung bearbeitet. Durch die Zentrierung der Bohrstange ist eine sehr genaue Mittellage der Bohrungsmitte realisierbar. Mit anderen Worten, es kann eine sehr hohe Fluchtgenauigkeit der Bohrungen gewährleistet werden.

Nach einer Weiterbildung der Erfindung ist vorgesehen, daß die Bohrstange durch eine der bearbeiteten Bohrungen und ein Gegenwerkzeug durch die gegenüberliegende äußerste Bohrung eingefahren und miteinander gekoppelt werden. Nach einer ersten Ausführungsvariante ist vorgesehen, daß der Außendurchmesser des Gegenwerkzeugs an den Durchmesser der äußersten, bearbeiteten Bohrung derart angepaßt ist, daß eine sehr genaue Zentrierung beziehungsweise Führung des Gegenwerkzeugs durch die Bohrung erfolgt. Nach einer zweiten Ausführungsvariante ist vorgesehen, daß der Außendurchmesser des Gegenwerkzeugs kleiner ist als der Durchmesser der äußersten, bearbeiteten Bohrung und daß das Gegenwerkzeug eine Führungseinrichtung mit mehreren über den Umfang des Gegenwerkzeugs in einem Abstand zueinander verteilt angeordnete Führungsleisten umfaßt. Die Führungsleisten sind in das Gegenwerkzeug einfahrbar und ausfahrbar ausgebildet. Vor oder nach dem Einbringen des Gegenwerkzeugs in die Bohrung werden die Führungsleisten aus einer zurückgezogenen Position in eine ausgefahrene Position verlagert, in der sie sich an der Bohrungsoberfläche abstützen, um das Gegenwerkzeug in der Bohrung zu führen und zu zentrieren. Bei beiden Ausführungsvarianten wird die Bohrstange in der gegenüberliegenden äußersten, bearbeiteten Bohrung mit geeigneten Mitteln zentriert und geführt.

Die Kopplung der Bohrstange und des Gegenwerkzeugs kann drehfest sein, so daß bei einer Beaufschlagung der Bohrstange mit einem Antriebs- oder Bremsmoment eine Mitnahme des Gegenwerkzeugs oder bei einer Beaufschlagung des Gegenwerkzeugs eine Drehmitnahme der Bohrstange erfolgt, so daß das Gegenwerkzeug beziehungsweise die Bohrstange ebenfalls rotiert. Mithin kann die Kopplung derart erfolgen, daß bei einer Verlagerung der Bohrstange in Richtung ihrer Längsachse auch das Gegenwerkzeug hin und her verfahren wird. Selbstverständlich kann die Verbindung zwischen der Bohrstange und dem Gegenwerkzeug auch derart gestaltet sein, daß ausschließlich eine Zentrierung der beiden Teile zueinander erfolgt, so daß bei einer Rotation und gegebenenfalls einer Verlagerung der Bohrstange in axialer Richtung keine Mitnahme des Gegenwerkzeugs erfolgt. In diesem Fall steht das Gegenwerkzeug während der Bearbeitung der Bohrungsoberflächen still.

Eine weitere Ausführungsform des Verfahrens zeichnet sich dadurch aus, daß als Gegenwerkzeug eine Führungshülse verwendet wird, die nachdem die Bohrstange in die Bohrungen eingefahren ist, mit dem - in Einfahrrichtung der Bohrstange gesehen- vorderen Ende der Bohrstange gekoppelt wird. Die Kopplung erfolgt vorzugsweise derart, daß das vordere Ende der Bohrstange in die in der äußersten Bohrung angeordnete Führungshülse eingeschoben wird oder daß die Führungshülse auf das vordere Ende der Bohrstange aufgeschoben wird. Das vordere Ende der Bohrstange ist innerhalb der Führungshülse in axialer Richtung und in Umfangsrichtung frei beweglich. Die Führungshülse ist derart gestaltet, daß sie im eingebauten Zustand die äußerste bearbeitete Bohrung zumindest eingreift oder diese vollständig durchgreift.

Außerdem ist bei einer weiteren Ausführungsform des Verfahrens vorgesehen, daß die Bohrstange exzentrisch in die Bohrungen eingefahren wird. Hierzu wird zum Beispiel die Bohrstange abgesenkt beziehungsweise angehoben, beispielsweise um 2 mm bis 3 mm, während das die zu bearbeitenden Bohrungsoberflächen aufweisende Bauteil, zum Beispiel Zylinderblock oder Nockenwellengehäuse, unbeweglich in einer fixen Position angeordnet ist. Nachdem die Bohrstange in die Bohrungen eingefahren ist, wird sie zum Bearbeiten der Bohrungsoberflächen wieder angehoben beziehungsweise abgesenkt, in Rotation versetzt und in axialer Richtung bewegt. Bei diesem Ausführungsbeispiel kann die mindestens eine Schneideinrichtung unbeweglich an der Bohrstange befestigt sein. Es ist aber auch möglich, daß zumindest die mindestens eine Schneide der Schneideinrichtung in die Bohrstange einfahrbar und aus dieser ausfahrbar ausgebildet ist. Bei der Verwendung einer Bohrstange mit in radialer Richtung verlagerbaren Schneiden kann gegebenenfalls auf ein exzentrisches Einfahren der Bohrstange in die Bohrungen verzichtet werden, das heißt, die Bohrstange, die einen geringeren Durchmesser aufweist als die zu bearbeitenden Bohrungsoberflächen wird in eine Position gebracht, in der sie mit den beiden äußersten, bearbeiteten Bohrungen fluchtet und anschließend in die Bohrungen eingefahren. Bei einer anderen Ausführungsform des Verfahrens ist vorgesehen, daß zum exzentrischen Einfahren der Bohrstange in die Bohrungen das die Bohrungen aufweisende Werkstück entsprechend angehoben oder abgesenkt wird, und daß erst nachdem die Bohrstange in die Bohrungen eingefädelt worden ist, das Werkstück wieder soweit angehoben beziehungsweise abgesenkt wird, daß die Längsmittel(Dreh-)achse der Bohrstange mit der Längsmittelachse der Bohrungen fluchtet. Die Bohrstange befindet sich hier zumindest während des Einführens in die Bohrungen in einer fixen Position.

Bevorzugt wird auch eine Ausführungsform des Verfahrens, bei dem die Bearbeitung der übrigen, zwischen den äußersten Bohrungen angeordneten Bohrungsoberflächen zeitgleich erfolgt. Die Bohrstange umfaßt für die zwischen den äußersten Bohrungsoberflächen angeordneten Bohrungsoberflächen jeweils eine Schneideinrichtung, so daß bei einer Rotation der Bohrstange um ihre Längsachse und einer Verlagerung in Richtung ihrer Längsachse alle zwischen den beiden äußersten, bearbeiteten Bohrungsoberflächen angeordneten Bohrungsoberflächen gleichzeitig bearbeitet werden, wodurch die Bearbeitungszeit der Bohrstange herabgesetzt werden kann. Durch die simultane Bearbeitung sämtlicher Bohrungen und gege-benenfalls durch eine -in Umfangsrichtung der Bohrstange gesehen- versetzte Anordnung der Schneideinrichtungen kann ein Kräfteausgleich erreicht werden.

Bei einer anderen Ausführungsform der Bohrstange weist diese nur eine Schneideinrichtung für alle zu bearbeitenden Bohrungsoberflächen auf. Mit dieser Bohrstange werden die in Reihe angeordneten Bohrungen nacheinander bearbeitet.

Schließlich wird noch eine Ausführungsform des Verfahrens bevorzugt, die sich dadurch auszeichnet, daß durch eine Hin- beziehungsweise Herbewegung der Bohrstange in Richtung ihrer Längsachse die Bohrungsöffnungen mit ersten und zweiten Fasen versehen werden. Das Anfasen der Bohrungsöffnungen kann vor oder nach dem Bearbeiten der Bohrungsoberfläche erfolgen. Hierzu weist die Bohrstange mindestens eine, vorzugsweise mehrere, jeweils einer Bohrungs-Oberfläche zugeordnete Schneide auf, die in radialler Richtung und zwar über die Bohrungsoberfläche hinaus verlagerbar ist. Vorzugsweise wird für das Bearbeiten der Bohrungsoberfläche und für das Änfasen der Öffnungen der Bohrung die gleiche Schneideinrichtung verwendet.

Weitere vorteilhafte Ausführungsformen des Verfahrens ergeben sich aus den übrigen Unteransprüchen.

Im folgenden wird die Erfindung anhand der Zeichnungen näher erläutert. Es zeigen:
- Figur 1: einen Längsschnitt durch ein erstes Ausführungsbeispiel einer Bohrstange;
- Figur 2: einen Längsschnitt durch ein zweites Ausführungsbeispiel der Bohrstange und
- Figur 3: einen Ausschnitt aus einem weiteren Ausführungsbeispiel der Bohrstange.

Bohrstangen der hier angesprochenen Art sind allgemein zur Bearbeitung von in axialer Richtung in einem Abstand zueinander angeordneten Bohrungsoberflächen geeignet. Rein beispielhaft soll im folgenden davon ausgegangen werden, daß mit Hilfe der Bohrstange Lagerbohrungsoberflächen von Kurbelund/oder Nockenwellen bearbeitet werden sollen.

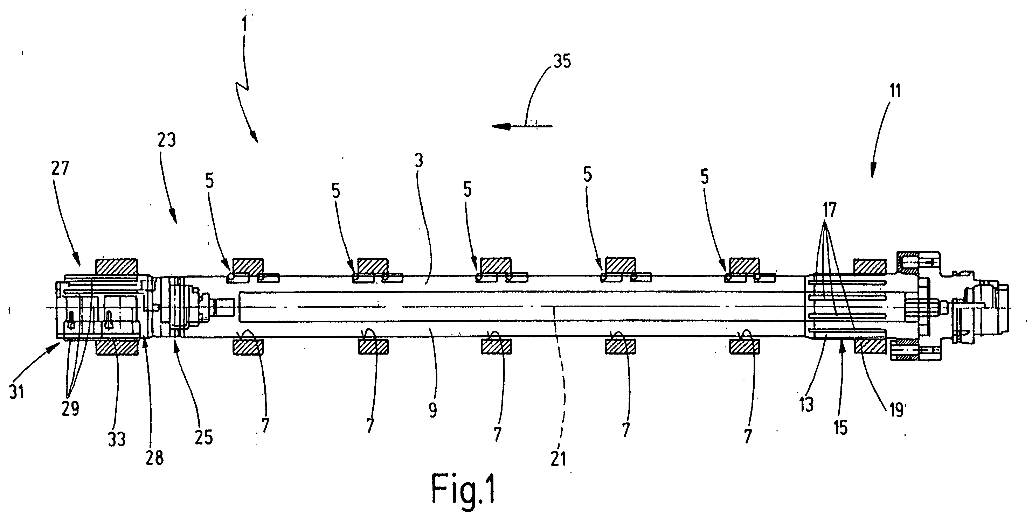

Figur 1 zeigt einen Längsschnitt eines ersten Ausführungsbeispiels einer Bohrstange 1, die einen Grundkörper 3 umfaßt, der zylindrisch ausgebildet ist und einen im wesentlichen kreisrunden Querschnitt aufweist. Über die Länge des Grundkörpers 3 sind hier mehrere Schneideinrichtungen 5 verteilt. Die Schneideinrichtungen 5 weisen einen in axialer Richtung der Bohrstange 1 vorgegebenen Abstand auf, der dem Abstand entspricht, den die Lagerbohrungen 7 zueinander aufweisen. In Figur 1 sind die Schneideinrichtungen 5 in zwei Positionen dargestellt, wobei die linke Darstellung der Schneideinrichtung 5 deren Position nach der Bearbeitung der Lagerbohrung 7 zeigt.

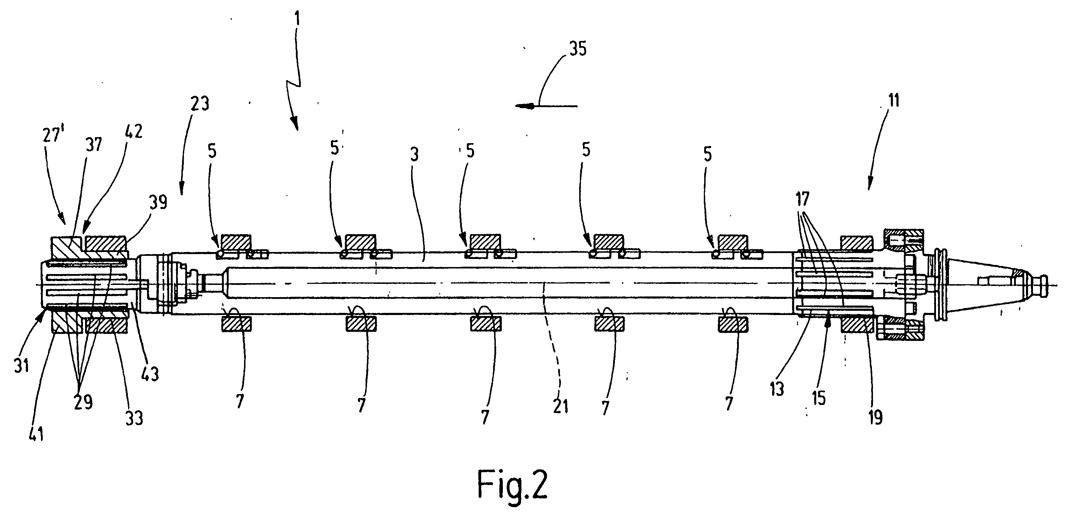

Der Grundkörper 3 weist im Bereich eines ersten Längsabschnitts 9 einen Außendurchmesser auf, der kleiner ist als der Durchmesser der Lagerbohrungen 7 vor deren Bearbeitung durch die Bohrstange 1. Der Grundkörper 3 weist an seinem hinteren Ende 11, an dem die Bohrstange 1 mit einem nicht dargestellten Antrieb einer Werkzeugmaschine koppelbar ist, einen zweiten Längsabschnitt 13 auf, in dessen Bereich der Außendurchmesser des Grundkörpers 3 größer ist als im Bereich des ersten Längsabschnitts 9. Die Schnittstelle zum Antrieb hin ist hier von einer mit der Bohrstange 1 gekoppelten Hohlschaftkupplung gebildet, während bei dem in Figur 2 dargestellten Ausführungsbeispiel die Schnittstelle einen Spannkonus umfaßt.

Mithin weist die Bohrstange 1 im Bereich des zweiten Längsabschnitts 13 eine Führungseinrichtung 15 auf, die mehrere, über den Umfang des Grundkörpers 3 verteilt und in einem Abstand zueinander angeordnete Führungsleisten 17 umfaßt. Die Führungseinrichtung 15 dient dazu, die Bohrstange 1 beziehungsweise den Grundkörper 3 in einer weiteren, äußersten Lagerbohrung 19 längsbeweglich und drehbeweglich zu führen. Die äußerste Lagerbohrung 19 wird vor dem Einfahren der Bohrstange 1 in die Lagerbohrungen bearbeitet und dient als erste Lagerstelle für die Bohrstange 1.

Die Länge der parallel zur Längsmittelachse 21 der Bohrstange 1 verlaufenden Führungsleisten 17 ist größer als die Summe aus der Breite des äußeren Lagers 19 und der Strecke, die die Bohrstange 1 zur Bearbeitung der Lagerbohrungen 7 in Richtung ihrer Längsmittelachse 21 verschoben wird. Dadurch kann eine sichere und im Bereich der äußeren Lagerbohrung 19 kippfreie Führung der Bohrstange 1 während der Bearbeitung der Lagerbohrungen 7 gewährleistet werden.

Die Bohrstange 1 ist an ihrem vorderen, der Antriebsseite gegenüberliegenden Ende 23 über eine Kupplungseinrichtung 25, die hier von einer Hohlschaftkupplung (HSK) gebildet ist, lösbar mit einem Gegenwerkzeug 27 gekoppelt. Das Gegenwerkzeug 27 umfaßt einen Grundkörper 28, in den eine mehrere Führungsleisten 29 aufweisende Führungseinrichtung 31 integriert ist, deren Aufbau dem der Führungseinrichtung 15 entsprechen kann. Die parallel zur Längsmittelachse 21 der Bohrstange 1 verlaufenden Führungsleisten 29 ragen über den Außenfläche des Grundkörpers 28 hinaus. Das Gegenwerkzeug 27 ist mit Hilfe der Führungseinrichtung 31 drehbeweglich und längsbeweglich in der anderen äußersten Lagerbohrung 33 geführt. Die Länge der Führungsleisten 29 ist länger als die Summe aus der Breite der Lagerbohrung 33 und der Wegstrecke, den die Bohrstange 1 in Richtung ihrer Längsmittelachse 21 verschoben wird, um die zwischen den äußersten Lagerbohrungen 19, 33 angeordneten Lagerbohrungen 7 mit Hilfe der Schneideinrichtungen 5 zu bearbeiten. Bevor das Gegenwerkzeug 27 in die Lagerbohrung 33 eingefahren wird, wird diese zuvor zur Erzeugung einer Lagerfläche bearbeitet.

Bei einer ersten Ausführungsvariante ist vorgesehen, daß die Führungsleisten 29 beziehungsweise 17 der Führungseinrichtungen 31, 15 in radialer Richtung verlagerbar ausgebildet sind. Nach einer anderen Ausführungsvariante sind die Führungsleisten 29 und/oder die Führungsleisten 17 an dem Gegenwerkzeug 27 beziehungsweise dem Grundkörper 3 starr befestigt oder federnd gelagert, das heißt, daß die Führungsleisten 17, 29 mit Hilfe eines Federelements radial nach außen in Richtung der Bohrstange mit einer definierten Kraft gedrückt werden oder daß sie unbeweglich an der Bohrstange angebracht sind. Ähnliches gilt für die Schneideinrichtungen 5 beziehungsweise deren jeweils mindestens eine Schneide, die in radialer Richtung verlagerbar oder unbeweglich starr am Grundkörper 3 befestigt sein kann.

Im folgenden wir das oben beschriebene Verfahren näher erläutert. Zunächst werden die beiden äußersten Lagerbohrungen 19 und 33 zur Erzeugung jeweils einer Lagerfläche für die Führungseinrichtung 15 des Grundkörpers 3 und die Führungseinrichtung 31 des Gegenwerkzeugs 27 bearbeitet. Vorzugsweise werden die Lagerbohrungen 19, 33 bereits auf den geforderten Solldurchmesser der Lagerbohrungen und gegebenenfalls die gewünschte Oberflächengüte bearbeitet.

Zunächst wird eine der äußersten Bohrungsoberflächen bearbeitet, danach das die Bohrungsoberflächen aufweisende Werkstück um 180° verschwenkt und dann die andere äußerste Bohrungsoberfläche bearbeitet.

Vor dem Einfahren der Bohrstange 1 in die Lagerbohrungen 19, 7, wird die Bohrstange 1 soweit absenkt, daß deren Längsmittelachse 21 unterhalb der Mitte der Lagerbohrungen angeordnet ist. Dann wird der Grundkörper 3 der Bohrstange 1 exzentrisch durch die auf der Antriebsseite der Bohrstange 1 angeordnete äußerste Lagerbohrung 19 in die zwischen den beiden äußersten Lagerbohrungen 19, 33 angeordneten Lagerbohrungen 7 eingefahren. Schließlich wird die Bohrstange 1 wieder angehoben, so daß deren Längsmittelachse mit der Mitte der Lagerbohrung 19 fluchtet, und in die bearbeitete Lagerbohrung 19 eingefahren und zwar soweit, bis der zweite, die Führungseinrichtung 15 aufweisende Längsabschnitt 13 der Bohrstange 1 in der äußersten, bereits bearbeiteten Lagerbohrung 19 geführt und zentriert ist. Das Gegenwerkzeug 27 wird in die der Lagerbohrung 19 gegenüberliegenden äußersten Lagerbohrung 33 eingefahren. In dem Freiraum zwischen der äußersten Lagerbohrung 33 und der benachbart, in einem Abstand angeordneten Lagerbohrung 7 werden das Gegenwerkzeug 27 und die Bohrstange 1 mit Hilfe der Kupplungseinrichtung 25 miteinander gekoppelt.

Dadurch, daß das Gegenwerkzeug 27 mit der Bohrstange 1 gekoppelt wird, erfolgt eine Zentrierung der Bohrstange 1, die nun an beiden Enden gelagert ist, wodurch eine sehr hohe Fluchtgenauigkeit der in Reihe angeordneten Lagerbohrungen realisierbar ist.

Das exzentrische Einfahren der Bohrstange 1 in die Bohrung kann auch dadurch realisiert werden, daß das Werkstück um ein bestimmtes Maß abgesenkt und nach dem Einfädeln der Bohrstange wieder angehoben wird.

Rein beispielhaft wird davon ausgegangen, daß die Vorschubbewegung der Bohrstange 1 zum Bearbeiten der Lagerbohrungen 7 in Richtung eines Pfeils 35, in Figur 1 also nach links, erfolgt. Die Anordnung der Bohrstange 1 ist dabei vor der Bearbeitung der Lagerbohrungen so gewählt, daß die Schneideinrichtungen 5 vor den Lagerbohrungen 7, in Figur 1 also rechts davon, angeordnet sind. Zum spanenden Bearbeiten der Lagerbohrungen 7 wird die Bohrstange 1 mit einem Antriebsmoment beaufschlagt und in Richtung ihrer Längsmittelachse 21 in Figur 1 nach links verlagert. Dadurch wird auch das in der Lagerbohrung 33 geführte und von der Bohrstange 1 zur Drehung angetriebene Gegenwerkzeug 27 in Längsrichtung verschoben. Der Verschiebeweg der Bohrstange 1 ist zumindest so lang wie die Breite der Lagerbohrungen 7 beziehungsweise die Breite der breitesten Lagerbohrung 7.

Figur 2 zeigt ein weiteres Ausführungsbeispiel der Bohrstange 1 im Längsschnitt. Gleiche Teile sind mit gleichen Bezugszeichen versehen, so daß insofern auf die Beschreibung zur Figur 1 verwiesen werden kann. Im folgenden wird lediglich auf die Unterschiede näher eingegangen. Das Gegenwerkzeug 27' ist hier von einer Führungshülse 37 gebildet, die einen ersten, durchmesserkleineren Längsabschnitt 39 und einen zweiten, durchmessergrößeren Längsabschnitt 41 aufweist. Im Bereich des ersten Längsabschnitts 39 weist die Führungshülse 37 einen Außendurchmesser auf, der im wesentlichen gleich groß ist wie der Durchmesser der äußersten, bearbeiteten Lagerbohrung 33. Dadurch, daß der Außendurchmesser des zweiten Längsabschnitts 41 größer ist als der des ersten Längsabschnitts 39 ist ein Anschlag 42 gebildet, wodurch die Führungshülse 37 definiert in die Lagerbohrung 33 einsteckbar ist. Der Durchmesser der Durchgangsöffnung der Führungshülse 37 ist kleiner als der Durchmesser der Lagerbohrungen 7 vor deren Bearbeitung durch die Bohrstange 1.

. Die Bohrstange 1 weist an ihrem vorderen, der Antriebsseite gegenüberliegenden Ende 23 einen Längsabschnitt 43 auf, der in die Durchgangsöffnung der Führungshülse 37 einschiebbar ist. Im Bereich des Längsabschnitts 43 ist eine Führungseinrichtung 31 vorgesehen, mit deren Hilfe die Bohrstange 1 in der Führungshülse 37 geführt und zentriert ist. Der Außendurchmesser des Längsabschnitts 43 ist kleiner als der Durchmesser der Lagerbohrungen 7 vor deren Bearbeitung durch die Bohrstange 1. Der Längsabschnitt 43 ist drehbeweglich und längsverschieblich in der Führungshülse 37 geführt. Bei einer Verlagerung der Bohrstange 1 erfolgt also keine Mitnahme der Führungshülse 37, die in einer fixen, in der Lagerbohrung 33 eingesteckten Position verbleibt.

Zur spanenden Bearbeitung der Lagerbohrungen 7 werden auch bei der Verwendung der anhand von Figur 2 beschriebenen Bohrstange 1 zunächst die beiden äußersten Lagerbohrungen 33 und 19 zur Erzeugung jeweils einer Lagerfläche bearbeitet, beispielsweise gebohrt und gegebenenfalls gehont. Dann wird durch die auf der Antriebsseite angeordnete äußerste Lagerbohrung 19 die Bohrstange 1 exzentrisch in die Lagerbohrungen 7 eingefahren. Vor dem Einfahren des vorderen Endes der Bohrstange 1 mit dem Längsabschnitt 43 in die Durchgangsöffnung der in der anderen äußersten, bearbeiteten Lagerbohrung 33 eingebrachten Führungshülse 37, wird die Bohrstange 1 in eine mit der Mitte der Lagerbohrung 33 fluchtende Position verlagert.

Nach einer weiteren Ausführungsvariante ist vorgesehen, daß die Schneiden der Schneideinrichtungen 5 bezüglich des Grundkörpers 3 in radialer Richtung verlagerbar sind, so daß die Bohrstange 1 zum Einfahren in die Lagerbohrungen gegebenenfalls nicht angehoben oder abgesenkt werden braucht. Die Bohrstange wird hierzu in eine Position gebracht, in der ihre Längsmittelachse 21 mit der Mitte der Lagerbohrung 33 fluchtet. Beim Einfahren befinden sich die Schneiden der Schneideinrichtungen in einer zurückgezogenen Stellung, so daß eine Kollision mit den zu bearbeiteten Lagerbohrungen 7 vermieden wird. Die Verlagerung der Schneiden und/oder der Führungsleisten der Führungseinrichtungen 15, 31 kann beispielsweise mittels eines Kühlmittels für die Bohrstange 1 erfolgen.

Bei einer vorteilhaften Ausführungsform des Verfahrens zur Bearbeitung der Lagerbohrungen ist vorgesehen, daß durch eine Hin- beziehungsweise Herbewegung. der Bohrstange 1 in Richtung ihrer Längsmittelachse 21 die Öffnungen der Lagerbohrungen 7 angefast werden. Hierzu sind die Schneiden der Schneideinrichtungen 5 so radial verlagerbar ausgebildet, daß nach beziehungsweise vor der Bearbeitung der Lagerbohrungsoberfläche über das Sollmaß der Lagerbohrungen hinaus verlagert sind.

Um eine kurze Bearbeitungsdauer der Lagerbohrungen zu erreichen, können während der Bearbeitung der beiden äußersten Lagerbohrungen 19, 33 zur Herstellung von Lagerflächen für die Bohrstange 1 gleichzeitig die inneren Lagerbohrungen 7 vorbearbeitet, beispielsweise geschruppt, werden.

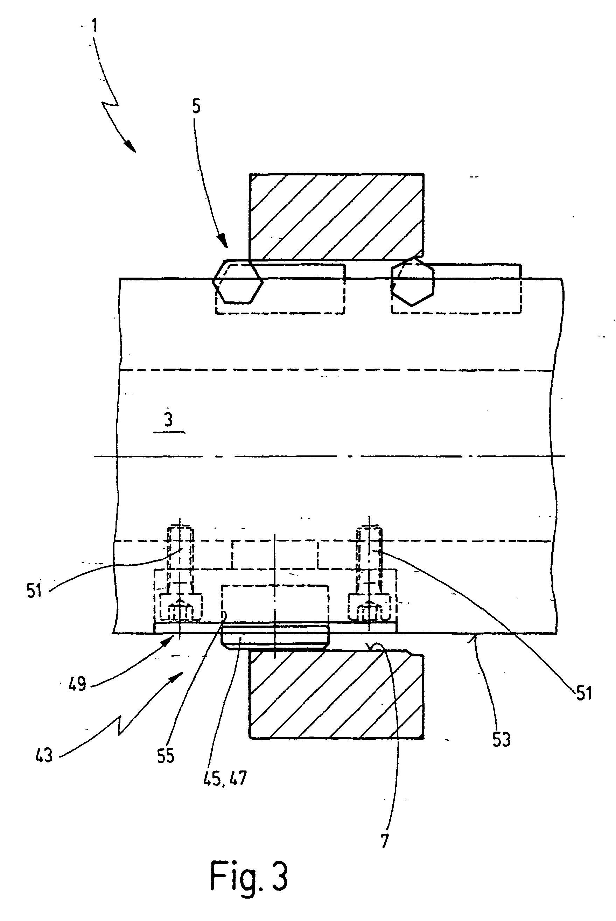

Figur 3 zeigt einen Ausschnitt eines weiteren Ausführungsbeispiels der Bohrstange 1, bei dem eine weitere Führungseinrichtung 43 vorgesehen ist, die mindestens ein Führungselement 45 umfaßt, das hier von einer Führungsleiste 47 gebildet ist. Die Führungsleiste 47 ist an einer Halteeinrichtung 49 angeordnet, die mit Hilfe hier von Schrauben 51 gebildeten Befestigungsmitteln lösbar mit dem Grundkörper 3 der Bohrstange 1 verbunden ist. Die Führungsleiste 47 ist hier im wesentlichen auf der der Schneideinrichtung 5 gegenüberliegenden Seite der Bohrstange 1 angeordnet und dient der Schwingungsdämpfung der Bohrstange 1 während der Bearbeitung der Lagerbohrungen 7. Die über die Außenseite 53 der Bohrstange 1 hervorstehende Führungsleiste 47 kann starr, das heißt gegenüber dem Grundkörper 3 der Bohrstange 1, unbeweglich angeordnet sein. Es ist auch möglich, daß die Führungsleiste 47 federnd gelagert ist, so daß sie entgegen einer Federkraft in eine Aufnahme 55 in der Halteeinrichtung 49 eindrückbar ist. Die Führungseinrichtung 43 kann selbstverständlich auch mehrere Führungsleisten 47 aufweisen, die über einen Umfangsbereich der Bohrstange 1 verteilt angeordnet sind, wobei die Führungsleisten 47 feststehend oder gefedert ausgebildet sein können. Die anhand der Figur 3 beschriebene Führungseinrichtung 43 ist ohne weiteres im Zusammenhang mit einer anhand der Figuren 1 und 2 beschriebenen Bohrstange 1 einsetzbar.

Bei einem vorteilhaften Ausführungsbeispiel der Bohrstange 1 ist zumindest einer der zwischen den äußersten Lagerbohrungen 19, 33 angeordneten Lagerbohrungen 7 eine Führungseinrichtung 43 zugeordnet, die eine Führungsleiste oder mehrere Führungsleisten aufweisen kann. Selbstverständlich ist es auch möglich, daß mehrere der Lagerbohrungen 7 jeweils einer Führungseinrichtung 43 zugeordnet ist. - Denkbar ist auch, daß allen Lagerbohrungen 7 jeweils eine Führungseinrichtung 43 zugeordnet ist.

Bei einem weiteren vorteilhaften Ausführungsbeispiel der Bohrstange umfaßt die Führungseinrichtung 43 mindestens eine federnd gelagerte und ausfahrbar ausgebildete Führungsleiste und mindestens eine feststehend angeordnete Führungsleiste. In diesem Zusammenhang wird unter "ausfahrbar" verstanden, daß die Führungsleiste in den Grundkörper 3 der Bohrstange 1 um ein bestimmtes Maß einfahrbar und ausfahrbar ist, beispielsweise mit Hilfe einer hydraulischen Betätigungseinrichtung.

Zusammenfassend bleibt festzuhalten, daß durch die Verwendung der beiden äußersten, bearbeiteten Lagerbohrungen 19, 33 als Lagerflächen für die Bohrstange 1 eine sehr genaue Zentrierung der Bohrstange 1 möglich ist. Hierdurch kann eine sehr genaue Mittellage der Bohrungsmitte der Lagerbohrungen 7, 19, 33 sichergestellt werden. Es hat sich gezeigt, daß mit Hilfe des obengenannten Verfahrens zur spanenden Bearbeitung der Lagerbohrungen eine höhere Fluchtgenauigkeit der Lagerbohrungen realisierbar ist, als es bei den herkömmlichen Verfahren zur Bearbeitung der Lagerbohrungen möglich ist.

## Patentansprüche

1. Verfahren zum spanenden Bearbeiten von in axialer Richtung in einem Abstand zueinander angeordneten Bohroberflächen, insbesondere von Kurbelwellen- und/oder Nockenwellen-Lagerbohrungen, mit folgenden Schritten:
- Bearbeitung mindestens einer der beiden äußeren Bohrungsflächen zur Erzeugung einer Lagerfläche für die Bearbeitung weiterer Bohrungsoberflächen,
- Einfahren einer Bohrstange durch eine der bearbeiteten, äußersten Bohrungen in mindestens eine der zwischen den äußersten Bohrungsoberflächen liegenden Bohrungen,
**dadurch gekennzeichnet, dass** zunächst eine der äußersten Bohrungsoberflächen bearbeitet wird und dass danach das die Bohrungsoberflächen aufweisende Werkstück um 180° verschwenkt und die andere äußerste Bohrungsoberfläche bearbeitet wird.

2. Verfahren nach Anspruch 1, **dadurch gekennzeichnet, dass** die Bohrstange durch eine der bearbeiteten Bohrungen und ein Gegenwerkzeug durch die gegenüberliegende äußerste Bohrung eingefahren und miteinander gekoppelt werden.

3. Verfahren nach einem der vorhergehenden Ansprüche, **dadurch gekennzeichnet, dass** als Gegenwerkzeug eine Führungshülse verwendet wird, die nachdem die Bohrstange in die Bohrungen eingefahren ist, mit dem -in Einfahrrichtung der Bohrstange gesehen- vorderen Ende der Bohrstange gekoppelt wird.

4. Verfahren nach einem der vorhergehenden Ansprüche, **dadurch gekennzeichnet, dass** lediglich ein erster Teil der Bohrstange durch eine der bearbeiteten Bohrungen in zumindest eine der anderen Bohrungen eingefahren wird und dass das Gegenwerkzeug durch die andere bearbeitete Bohrung in die übrigen Bohrungen eingefahren und mit dem ersten Teil gekoppelt wird.

5. Verfahren nach einem der vorhergehenden Ansprüche, **dadurch gekennzeichnet, dass** die Führungshülse in die äußerste bearbeitete Bohrung eingreift oder diese durchgreift.

6. Verfahren nach einem der vorhergehenden Ansprüche, **dadurch gekennzeichnet, dass** die Bohrstange exzentrisch in die Bohrungen eingefahren wird.

7. Verfahren nach einem der vorhergehenden Ansprüche, **dadurch gekennzeichnet, dass** die Bearbeitung der übrigen, zwischen den äußersten Bohrungen angeordneten Bohrungsoberflächen zeitgleich erfolgt.

8. Verfahren nach einem der vorhergehenden Ansprüche, **dadurch gekennzeichnet, dass** bei der Bearbeitung der beiden äußersten Bohrungsoberflächen die dazwischen angeordneten Bohrungsoberflächen vorbearbeitet, insbesondere geschruppt, werden.

9. Verfahren nach einem der vorhergehenden Ansprüche, **dadurch gekennzeichnet, dass** durch eine Hin- beziehungsweise durch eine Herbewegung der Bohrstange in axialer Richtung die Bohrungsöffnungen mit ersten und zweiten Fasen versehen werden.

10. Verfahren nach einem der vorhergehenden Ansprüche, **dadurch gekennzeichnet, dass** nach dem Einfahren der Bohrstange in die Bohrungen im Bereich mindestens einer der äußersten, bearbeiteten Bohrungen mindestens ein Führungselement, insbesondere Führungsleiste, radial aus der Bohrstange ausgefahren wird.

11. Verfahren nach einem der vorhergehenden Ansprüche, **dadurch gekennzeichnet, dass** im Bereich mindestens einer der mittleren Bohrungen mindestens ein weiteres Führungselement, insbesondere Führungsleiste, mit der zu bearbeitenden Bohrungsoberfläche in Kontakt gebracht wird.

## Claims

1. Method for machining boring surfaces disposed in axial direction spaced apart from each other, in particular surfaces of borings of crankshaft and/or camshaft bearings, comprising the following steps:
- machining of at least one of the two outer boring surfaces to produce a support surface for machining other boring surfaces,
- introducing a boring bar through one of the machined outermost borings into at least one of the borings located between the outermost boring surfaces,
**wherein** firstly one of the outermost boring surfaces is machined, and then the workpiece comprising the boring surfaces is rotated by 180° to machine the other outermost boring surface.

2. The method of claim 1, **wherein** the boring bar is introduced through one of the machined borings and coupled with a countertool which is introduced through the opposing outermost boring.

3. The method of any one of the preceding claims, **wherein** a guide bush is used as a countertool which is coupled with the front end of the boring bar - when viewed from the direction of introduction of the latter - after the boring bar has been introduced into the borings.

4. The method of any one of the preceding claims, **wherein** only a first portion of the boring bar is introduced through one of the machined borings into at least one of the other borings, and the countertool is introduced through the other machined boring into the remaining borings and coupled with the first portion.

5. The method of any one of the preceding claims, **wherein** the guide bush engages into the outermost machined boring or penetrates it.

6. The method of any one of the preceding claims, **wherein** the boring bar is eccentrically introduced into the borings.

7. The method of any one of the preceding claims, **wherein** the other boring surfaces disposed between the outermost borings are machined simultaneously.

8. The method of any one of the preceding claims, **wherein** the machining process of the two outermost boring surfaces comprising the pre-machining, in particular rough machining of the boring surfaces disposed between them.

9. The method of any one of the preceding claims, **wherein** the edges of the borings are provided with first and second bevels by alternate motion of the boring bar in axial direction.

10. The method of any one of the preceding claims, **wherein** at least one guide element, in particular a guide bar, is radially extended from the boring bar in the area of at least one of the outermost machined borings after the boring bar has been introduced into the borings.

11. The method of any one of the preceding claims, **wherein** at least one other guide element, in particular a guide bar, is brought into contact with the boring surface to be machined in the area of at least one of the middle borings.

## Revendications

1. Procédé d'usinage de surfaces d'alésage disposées en direction axiale et écartées l'une de l'autre, notamment de surfaces d'alésage d'un palier de vilebrequin et/ou d'un palier d'arbre à cames, comprenant les étapes suivantes :
- l'usinage d'au moins l'une des deux surfaces d'alésage situées aux extrémités afin d'engendrer une surface d'appui pour usiner d'autres surfaces d'alésages,
- l'introduction d'une barre d'alésage à travers l'un des alésages usinés situés aux extrémités dans au moins l'un des alésages disposés entre les surfaces d'alésage situées aux extrémités,
**caractérisé en ce qu'** on usine d'abord l'une des surfaces d'alésage situées aux extrémités, et qu'ensuite, on tourne la pièce à usiner comprenant les surfaces d'alésage de 180° pour usiner l'autre des surfaces d'alésage situées aux extrémités.

2. Procédé selon la revendication 1, **caractérisé en ce qu'**on introduit la barre d'alésage à travers l'un des alésages usinés et établit un couplage avec un contre-outil qui est introduit à travers l'alésage situé à l'extrémité opposée.

3. Procédé selon l'une des revendications précédentes, **caractérisé en ce qu'**on utilise une douille de guidage en tant que contre-outil qui est couplée, après que la barre d'alésage est introduite dans les alésages, à l'extrémité de la barre d'alésage qui est l'extrémité avant par rapport à la direction d'introduction.

4. Procédé selon l'une des revendications précédentes, **caractérisé en ce que** seulement une première section de la barre d'alésage est introduite à travers l'un des alésages usinés dans au moins l'un des autres alésages, et que le contre-outil est introduit à travers l'autre alésage usiné dans les alésages restants et couplé à la première section.

5. Procédé selon l'une des revendications précédentes, **caractérisé en ce que** la douille de guidage s'engage dans ou pénètre l'alésage usiné situé à l'extrémité.

6. Procédé selon l'une des revendications précédentes, **caractérisé en ce que** la barre d'alésage est introduite excentriquement dans les alésages.

7. Procédé selon l'une des revendications précédentes, **caractérisé en ce que** les autres surfaces d'alésage disposées entre les alésages situés aux extrémités sont usinées simultanément.

8. Procédé selon l'une des revendications précédentes, **caractérisé en ce que,** lors de l'usinage des deux surfaces d'alésage situées aux extrémités, les surfaces d'alésage disposées entre les deux dernières sont préusinées, notamment ébauchées.

9. Procédé selon l'une des revendications précédentes, **caractérisé en ce que** les bords des alésages sont pourvus de premiers et deuxièmes chanfreins par un mouvement aller et un mouvement retour, respectivement, de la barre d'alésage en direction axiale.

10. Procédé selon l'une des revendications précédentes, **caractérisé en ce que** dans la zone d'au moins l'un des alésages usinés situés aux extrémités, au moins un élément de guidage, notamment une nervure de guidage, est déployé de manière radiale après que la barre d'alésage est introduite dans les alésages.

11. Procédé selon l'une des revendications précédentes, **caractérisé en ce que** dans la zone d'au moins l'un des alésages situés au milieu, au moins un autre élément de guidage, notamment une nervure de guidage, est mis en contact avec la surface d'alésage à usiner.
